# EUROPÄISCHE PATENTSCHRIFT

(11) **EP 4 070 420 B1**
(45) Veröffentlichungstag und Bekanntmachung des Hinweises auf die Patenterteilung: **13.12.2023**
(21) Anmeldenummer: 20820134.3
(22) Anmeldetag: 04.12.2020
(51) Int. Cl.: H01R 43/20, H01R 4/72

(54) **SCHRUMPFGERÄT**
SHRINK-FIT DEVICE
DISPOSITIF DE FRETTAGE

(30) Priorität: 04.12.2019 DE 102019133051
(43) Veröffentlichungstag der Anmeldung: 12.10.2022
(73) Patentinhaber: DSG-Canusa GmbH, 53359 Rheinbach (DE)
(72) Erfinder: HOFFMANN, Viktor, 53359 Rheinbach (DE); GRÜNWALDT, Sascha, 53773 Hennef (DE)
(74) Vertreter: Bobzien, Hans Christoph
(86) Internationale Anmeldenummer: PCT/EP2020/084711
(87) Internationale Veröffentlichungsnummer: WO 2021/110955

(56) Entgegenhaltungen:
- WO-A1-2018/172470
- US-A- 4 764 662

## Beschreibung

Die Erfindung betrifft ein Schrumpfgerät zur Durchführung eines Schrumpfprozesses mittels Erwärmung eines auf mindestens ein Kabel aufgezogenen Schrumpfschlauchs zur Abdichtung einer Verbindungsstelle des Kabels, z.B. einem Splice-Bereich, insbesondere einem Parallel-Splice zur Verbindung von zwei Kabeln oder einem End-Splice zur Verbindung des Endes eines Kabels mit einem Adapter, Stecker oder dergleichen.

Das Schrumpfgerät umfasst einen Heizraum und einen in den Heizraum einbringbare, insbesondere einschiebbare Werkstückaufnahme, welche eine sich vorzugsweise in der horizontalen erstreckende Werkstückebene definiert. In dieser Werkstückebene werden auf der Werkstückaufnahme Werkstücke angeordnet, insbesondere mindestens ein mit einem Schrumpfschlauch umschlossenes Kabel, wobei der Schrumpfschlauch die Verbindungsstelle zwischen stirnseitig angrenzenden Kabeln oder die Verbindungsstelle zwischen einem Kabel und einem Endstecker, Stecker, Adapter oder dergleichen abdeckt und dichtend umschließt. Üblicherweise ist die Werkstückaufnahme so ausgebildet, dass mehrere Werkstücke nebeneinander in der Werkstückebene in den entsprechenden Sollpositionen nebeneinander positioniert sind.

Ferner umfasst ein bestehendes Schrumpfsystem eine Heizung mit einem Heizelementträger, auf dem mehrere Heizelemente angeordnet sind, die unterschiedlich bestromt werden können und die somit angeordnet über dem jeweiligen Schrumpfschlauch der Werkstückaufnahme den Schrumpfschlauch erhitzen und so mit den Kabeln an der jeweiligen Verbindungsstelle verbinden. Ferner kann das Schrumpfgerät eine Kühlung zur Kühlung des mindestens einen in der Werkstückaufnahme angeordneten Werkstücks und eine Steuerung für die Steuerung des Prozessablaufs, insbesondere des Betriebs der Heizung und der Kühlung umfassen.

Derartige Heizgeräte sind z. B. aus der DE 20 2008 002 823 U1 der Anmelderin oder aus US 4,764,662 und WO 2018/172470 A1 bekannt. Häufig sind diese ähnlich wie ein Sandwich-Toaster aufgebaut und umfassen damit das untere Heizfeld und das obere Heizfeld um somit zwischen sich den Heizraum aufzunehmen, in welchen die Werkstückaufnahme angeordnet wird, auf der mehrere Kabel mit darauf angeordneten Schrumpfschläuchen parallel nebeneinander angeordnet sind. Für das Erhitzen wird die Werkstückaufnahme in das Schrumpfgerät eingefahren und die obere und untere Heizung mit dem jeweiligen oberen und unteren Heizelementträger zugeklappt. Sodann erfolgt über einen definierten Zeitraum die Erwärmung der auf die Kabel aufgebrachten Schrumpfschläuche und eventuell mit einer anschließenden Kühlung durch die Kühlung. Die Steuerung regelt den Prozessablauf.

Die Geometrien und Anforderungen an die Produkte werden zunehmend komplexer, sodass die zu erhitzenden Stellen auch in komplexen Geometrien eingebracht werden, die manchmal schwer zugänglich sind. Bereits der Unterschied in der Fertigung zwischen einem Parallel-Splice und einem End-Splice bedarf jedes Mal eine Umrüstung der Schrumpfgeräte. Im Ergebnis ist nicht jedes Schrumpfgerät für jedes Endprodukt geeignet, sodass also unterschiedliche Schrumpfgeräte für unterschiedliche Produkte, im Extremfall für jedes Endprodukt ein einzelnes Schrumpfgerät mit unterschiedlichen Heizungen für unterschiedliche Produkte und unterschiedliche Größen vorgesehen werden müssen. Ferner ist zu berücksichtigen, dass bei kleineren Produkten die Heizung näher sein muss, wohingegen für größere Produkte die Heizung weiter entfernt sein muss, um eine Beschädigung der Leitungen zu vermeiden. Es werden also verschiedene Schrumpfgeräte mit verschiedenen Heizungen für verschiedene Produkte benötigt, häufig auch in unterschiedlichen Größen, weil die Größen durch die auftretenden Leitungsquerschnitte nur beschränkt einsetzbar sind. Ausgehend von diesem Stand der Technik liegt der Erfindung die Aufgabe zugrunde die beim Stand der Technik aufgezeigten Nachteile zumindest teilweise zu vermeiden und insbesondere ein Schrumpfgerät vorzusehen, welches besonders variabel für verschiedenartige Produkte einsetzbar ist und damit eine große Fertigungsflexibilität ermöglicht.

Dieses wird erfindungsgemäß durch den unabhängigen Anspruch 1 erreicht. Vorteilhafte, aber nicht zwingende Merkmale sind in den Unteransprüchen wiedergegeben.

In der einfachsten Ausgestaltung wird diese Aufgabe somit dadurch gelöst, dass das Heizsystem ein oberes Teil-Heizsystem mit einem oberen Heizelementträger umfasst, der über die Steuerung oberhalb der Werkstückebene entlang einer Längsachse X, entlang einer sich quer zur Längsachse erstreckenden Querachse Y, entlang einer sich quer zur Längsachse X und zur Querachse Y erstreckenden oberen Höhenachse Z im Verhältnis zu dem Werkstück bewegbar ist und um die Höhenachse Z im Verhältnis zum Werkstück drehbar ist, dass das Heizsystem ein unteres Teil-Heizsystem mit einem unteren Heizelementträger umfasst, der über die Steuerung unterhalb der Werkzeugebene entlang der Längsachse X, entlang der Querachse Z, entlang einer sich quer zur Längsachse X und zur Querachse Z erstreckenden unteren Höhenachse Z im Verhältnis zu dem Werkstück bewegbar ist und um die untere Höhenachse Z im Verhältnis zum Werkstück drehbar ist.

Damit sind also das obere Teil-Heizsystem und das untere Teil-Heizsystem jeweils entlang mindestens sechs Achsen im Verhältnis zu dem mindestens einem Werkstück verstellbar. In der einfachsten Ausführungsform sind somit das obere Teil-Heizsystem und das untere Teil-Heizsystem entlang einer gemeinsamen Längsachse X und einer gemeinsamen Querachse Y verstellbar, was dadurch erfolgt, dass diese auf einem gemeinsamen Schlitten angeordnet sind und an diesem Schlitten, vorzugsweise ausgebildet aus Konstruktionsprofilen oder Linearführungen entlang dieser Achsen motorisch verstellbar sind. Somit muss nur jeweils ein Linearmotor für die Verstellung von beiden Teil-Heizsystemen entlang der gemeinsamen Längsachse X und ein weiterer Linearmotor zur Verstellung entlang der gemeinsamen Querachse Y vorgesehen sein, was den Aufbau vereinfacht, den Steuerungsaufwand vereinfacht und die Kosten reduziert.

Eine noch größere Variabilität der Verstellung und Genauigkeit der Einstellung lässt sich erzielen, indem der obere Heizelementträger und der untere Heizelementträger entlang getrennter Längsachsen, nämlich entlang einer oberen Längsachse X und entlang einer unteren Längsachse X und entlang getrennter Querachsen, nämlich entlang einer oberen Querachse Y und entlang einer unteren Querachse Y verstellbar sind. Damit ist also eine Verstellung der Heizelementträger im Verhältnis zu dem jeweiligen Werkstück entlang von insgesamt acht Achsen realisierbar, wobei für die Bewegung entlang jeder Achse vorzugsweise zudem ein eigener Antrieb, insbesondere ein eigener Linearantrieb vorgesehen ist. Durch die erfindungsgemäße Ausgestaltung können somit die Heizelementträger besonders genau im Verhältnis zu der auf der jeweiligen Verbindungsstelle angeordnetem Schrumpfschlauch positioniert werden, um eine möglichst nahe und somit optimale Leistungseinbringung der Wärme zu realisieren und damit den Schrumpfprozess auf ein Minimum zu verkürzen. Dabei können der obere Heizelementträger und der untere Heizelementträger je nach Ausgestaltung der unabhängigen Achsen entweder vollständig unabhängig voneinander verfahren werden entlang der getrennten Längsrichtungen und Querrichtungen oder in der vereinfachten Ausführungsform mit sechs Achsen entlang der gemeinsamen Längsachse X und gemeinsamen Querachse Y. Jedenfalls sind die Höhenverstellung und die Drehung um die Höhenrichtung Z jeweils unabhängig voneinander möglich.

Erfindungsgemäß besteht also jedes Heizsystem von jedem Schrumpfgerät aus zwei getrennten Teil-Heizsystemen, wobei jedes Teil-Heizsystem also bis zu drei Positionierachsen und eine Rotationsachse umfassen kann. Dieses ermöglicht das freie Verfahren von den Heizelementträgern inklusive der Höhenprofile. Bevorzugt sind die Fertigungszellen als Rahmenträgersysteme für verschiedene Anwendungen ausgebildet.

Erfindungsgemäß ist es möglich, zwei oder mehr Werkstückaufnahmen innerhalb der Heizräume über zwei Schrumpfgeräte hinweg für verschiedene Anwendungen zu kombinieren. Dieses ermöglicht einen Rahmen-Verbundbetrieb zur Vergrößerung der Rahmenkapazität oder für Sonderanwendungen.

Es ist möglich, die einzelnen Schrumpfgeräte völlig unabhängig voneinander im Zyklus zu betreiben, sodass z.B. ein erstes Schrumpfgerät im Heizbetrieb arbeitet, während das danebenliegende Schrumpfgerät im Kühlbetrieb arbeiten und wiederum eine drittes Schrumpfgerät grade bestückt wird. Dieses ermöglicht eine vereinfachte Programmierung der Standardprogramme für einfache Anwendungen (simulierte Heizfeldprofile) .

Das Gerätekonzept ist somit modular in der Anzahl der Schrumpfgeräte.

Durch Prozessbetrachtung und Integration in die Fertigungsprozesse kann eine optimale und an den Produktionsprozess angepasste Anzahl an Schrumpfgeräten und Anlagen ermittelt und auch nachgerüstet werden.

Die Schrumpfgeräteanordnung ist in der Konzeptphase modular.

Ferner ist eine Erweiterung durch Hilfsmittel, wie z.B. Werkzeugträger-Transport und dergleichen zur zusätzlichen Optimierung der Nebenprozesse möglich.

Die Prozesssteuerung ermöglicht also ein sequenzielles Planen der Fertigungsabläufe, gleichzeitig aber ein paralleles Schrumpfen, Kühlen und Rüsten der einzelnen Zellen. Die Abarbeitung eines fertig gerüsteten Rahmens kann erfolgen, sobald ein Heizsystem frei ist.

Bevorzugt sind die Teil-Heizsyteme als Laufwagen ausgebildet. Vorzugsweise umfassen diese Laufwagen sich in Längsrichtung erstreckende und voneinander beabstandete Längsprofile sowie zwischen diesen Längsprofilen sich in der Querrichtung erstreckende Querprofile. Die Querprofile sind im Verhältnis zu den Längsprofilen in Längsrichtung motorisch axial verstellbar, z.B. über einen Linearmotor. Ein Heizelementträgerhalter ist im Verhältnis zu der Längsachse der Querprofile motorisch verstellbar in Querrichtung, z.B. über einen Linearmotor. Am dem Heizelementträgerhalter ist ein Heizelementträger befestigt, z.B. an einem Ende eines Bewegungszylinders, der in der Höhe entlang der Z-Achse motorisch verstellbar ist, vorzugsweise über einen Linearmotor und um die Z-Achse motorisch drehbar ist. Alle Motoren werden über die Steuerung entsprechend des Steuerungsprogramms für die Fertigung koordiniert gesteuert. Somit sind die Laufwagen der Teil-Heizsysteme mit den Heizelementträgern völlig unabhängig voneinander im Verhältnis zur Werkstückebene und den Werkstücken bewegbar.

Für das Thermomanagement, also die Temperatur- und Prozesssteuerung umfasst das Schrumpfgerät bei der bevorzugten Ausführungsform ein Abzugssystem, das auch mehrteilig aufgebaut sein kann. Zum einen kann dieses einen Hauptabzug umfassen, der vorzugsweise oberseitig an dem Schrumpfgerät angeordnet ist und ähnlich wie eine Abzugshaube ausgebildet ist, welche die Luft von oben aus dem Schrumpfgerät, insbesondere von der Heizzelle absaugt.

Daneben oder alternativ kann das Abzugssystem ein Parkabsaugsystem ausgebildet zum Absaugen der Hitze von den verfahrbaren Heizelementträgern in der Parkposition des Heizsystems bzw. der Heizsysteme umfassen. Damit wird eine weitere Erhitzung insbesondere im Bereich der Werkstückaufnahme verhindert, also ein unbeabsichtigtes Erhitzen von Werkstücken vor dem eigentlichen Prozessbeginn vermieden. Dieses ermöglicht eine Leistungsoptimierung des Gesamtprozesses und somit eine auf die Durchlaufzeit des Gesamtprozesses optimierte Produktion. Bevorzugt ist dieses Parkabsaugsystem für das Heizsystem in Parkposition als eine hohle Quertraverse ausgebildet, die sich in dem oberhalb von der Heizzelle und oberhalb der Parkposition der beweglichen Heizung mit dem Heizelementträger erstreckt, also die Position, welche die Heizung in der Ruheposition beim Rüsten des Schrumpfgeräts einnimmt.

Zur weiteren Optimierung des Thermomanagements kann das Heizsystem eine dem jeweiligen Heizelementträger zugeordnetes Hitzeschott umfassen, welches ausgebildet ist, um beim Medienausfall, also beim Stromausfall oder Druckluftausfall, den Heizelementträger vom Werkstück abzuschotten. Bei der bevorzugten Ausführungsform erfolgt dieses durch zwei seitlich neben dem Heizelementträger umklappbare Klappschotte, welche in der Arbeitsposition seitlich aufgeklappt sind und somit den Heizelementträger freigeben. Bei Medienausfall klappen diese Klappschotte durch Federkraft automatisch nach unten und decken den Heizelementträger von dem Werkstück bzw. den Werkstücken ab.

Bevorzugt weist jede Heizung des Schrumpfgeräts einen eigenen derartigen Hitzeschott auf.

Bei der bevorzugten Ausführungsform ist der Heizelementträger als Matrixheizsystem mit mehreren einzeln beheizbaren Heizflächen ausgestattet.

Bei der besonders bevorzugten Ausführungsform ist das Schrumpfgerät ausgebildet als Schrumpfzelle, also einem aus Konstruktionsprofilen aufgespannten Bearbeitungsraum umfassend alle Bestandteile des Schrumpfgeräts, also das Heizsystem, den Heizraum, das Abzugssystem, die Werkstückaufnahme, die Steuerung, die Luftführung und gegebenenfalls weitere Systemkomponenten.

Erfindungsgemäß können mehrere derartige Schrumpfzellen, die vorzugsweise jeweils identisch aufgebaut sind, miteinander kombiniert werden, also nebeneinander angeordnet werden, um größere Fertigungseinheiten zu bilden. Dabei können die Werkstückaufnahmen über mehrere Schrumpfzellen erstreckend kombiniert werden, um somit mehrere und größere Werkstückebenen zu bilden, auf denen Sonderserien gefertigt werden können.

Bei der bevorzugten Ausführungsform bilden die Konstruktionsprofile der Schrumpfzelle ein Verbundrahmensystem, welches den Heizraum und den Bearbeitungsraum an den Kanten umschließt. Damit ist die Schrumpfzelle ein selbstständig betreibbares Schrumpfgerät, welches aber bedarfsgerecht mit anderen Schrumpfzellen daneben modular erweiterbar ist.

Die Schrumpfzelle kann durch mit dem Verbundrahmensystem verbundene Platten, z.B. durchsichtige Plexiglasplatten, verschlossen sein, um so eine abgeschlossene Einheit zu bilden.

Bei der bevorzugten Ausführungsform weist die Werkstückaufnahme seitlich neben dieser angeordnete bzw. auch ausgebildete Kabelabwicklungen auf. Diese Kabelabwicklungen umfassen zur Gewichtsreduktion bevorzugt Lochplatten.

Die Werkstückaufnahme kann unterschiedlich ausgebildet sein. Bei der bevorzugten Ausführungsform ist diese ähnlich wie eine Schublade ausgebildet, die in den Heizraum der Schrumpfzelle einschiebbar und aus dieser ausziehbar ist. Diese schubladenartige Werkstückaufnahme, die vorzugsweise auf einem sich horizontal ersteckenden Rahmenprofil angeordnet ist, kann entweder händisch oder auch motorisch angetrieben sein, um dem Werker das Ein- und Ausschieben zu erleichtern.

Eine alternative Ausführungsform sieht insbesondere für gro-βe Werkstücke vor, dass die Werkstückaufnahme auf einem Wagen angeordnet ist, der auf dem Boden rollende in den Heizraum der Schrumpfzelle ein- und ausfahrbar ist.

Zur Optimierung des Thermomanagements insbesondere der Heizzelle des Schrumpfgeräts kann dieses ein Kühlsystem umfassen. Bevorzugt umfasst dieses Kühlsystem eine unterhalb der Werkstückaufnahme positionierbare Kühlfläche, die sich bevorzugt im Wesentlichen parallel zur Werkstückebene erstreckt und im Verhältnis zu dieser entlang einer Achse höhenverstellbar ist, die sich bevorzugt ebenfalls in Z-Richtung erstreckt. Praktisch umfasst diese Kühlfläche insbesondere mehrere auf der Ebene der Kühlfläche angeordnete Ventilatoren, welche die Luft von der Werkstückebene nach unten absaugen. Durch die Höhenverstellung, die insbesondere elektromotorisch und prozessgesteuert erfolgt, kann ein besonders gutes Thermomanagement realisiert werden.

Systembestandteil des Schrumpfgeräts kann auch ein visuelles Inspektionssystem zur Qualitätsprüfung sein. Insbesondere umfasst dieses ein automatisches Kamerasystem zur Prüfung der Schweißstelle an der Verbindungsstelle nach dem Erhitzen. Die Kamera erkennt die Position der Schlauchabschnitte und der Zentrierung. Durch Verwendung einer Infrarot-Kamera (IR-Kamera) kann die Oberflächentemperatur genau bestimmt und überprüft werden.

Erfindungsgemäß können mehrere Schrumpfzellen miteinander kombiniert werden, um größere Einheiten für größere Produkte zu bilden, z. B. zwei nebeneinander angeordnete Heizzellen, die entsprechende Werkstückaufnahmen aufnehmen. Dieses kann entsprechend in der Steuerungssoftware berücksichtigt werden, wobei auch die Entfernung von Kabelaufnahmen bzw. Kabelseitenwänden berücksichtigt wird. Dieses erhöht den modularen Ablauf der Produktion. Wird diese Schrumpfzelle mit weiteren Schrumpfzellen kombiniert, bleibt es trotzdem bei einem Heizsystem, welches allerdings über eine zentrale Steuerung entsprechend angesteuert wird für die einzelnen Werkstückaufnahmen, die auch kombinierbar sind. Damit sind also die einzelnen Zellen im Prozessablauf und mit der Werkstückaufnahme miteinander kombinierbar.

Die Steuerung gehört zur Grundeinheit des Schrumpfgeräts, kann jedoch auf mehrere Schrumpfgeräte erweitert werden.

Bevorzugt ist die Steuerung auf der Rückseite der Schrumpfzelle in einem Schaltschrank angeordnet, der die Steuerungskomponenten der Steuerung aufnimmt. Erfindungsgemäß können die Steuerungen für mehrere Schrumpfzellen miteinander kombiniert werden, so dass bei kombinierten Schrumpfzellen nicht jede Schrumpfzelle notwendigerweise eine eigene Steuerung umfassen muss.

Weitere Merkmale und Vorteile der vorliegenden Erfindung werden deutlich anhand der nachfolgenden Figurenbeschreibung bevorzugter Ausführungsbeispiele unter Bezugnahme auf die beiliegenden Abbildungen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist. Die Darstellungen in den Figuren sind im Wesentlichen maßstäblich. Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail.

Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im Wesentlichen" und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc.

Schließlich sind bei mehreren gleichen Bauteilen bzw. Elementen aus Gründen der Übersichtlichkeit nur jeweils eins mit einem Bezugszeichen versehen.

Sämtliche Merkmale der jeweiligen Ausführungsbeispiele seien hierbei unabhängig voneinander auch allgemein im Rahmen der Erfindung offenbart.

Es zeigen:
- Figur 1:: eine perspektivische Frontansicht einer Schrumpfeinheit umfassend drei nebeneinander angeordnete Schrumpfzellen;
- Figur 2:: Eine alternative isometrische Fronteinsicht der Schrumpfeinheit gemäß Figur 1 bei vollständig ausgezogenen Werkstückaufnahmen;
- Figur 3:: exemplarisch für die Teil-Heizsysteme eine isometrische vergrößerte Detaileinsicht eines oberen Teil-Heizsystems;
- Figur 4:: eine isometrische vergrößerte Frontansicht eines unterhalb der Werkstückebene der Werkstückaufnahme angeordneten Kühlsystems;
- Figur 5:: eine vergrößerte isometrische Frontansicht eines Hitzeschotts des oberen Teil-Heizsystems bei teilweise geschlossenem und teilweise geöffnetem Hitzeschott;
- Figur 6:: eine vergrößerte isometrische Draufsicht eines unteren Teil-Heizsystems auf den Heizelementträger mit dem Matrix Heizsystem und bei geöffnetem Hitzeschott;
- Figur 7:: eine nochmals vergrößerte isometrische Ansicht der Ansicht gemäß Figur 6 bei geschlossenem Hitzeschott;
- Figur 8:: eine vergrößerte perspektivische Draufsicht einer Werkstückaufnahme ausgebildet zur Aufnahme von mehreren Endverbindern, von denen jedoch nur ein Endverbinder an einem Kabel dargestellt ist;
- Figur 9:: eine vergrößerte isometrische Draufsicht eines höhenverstellbaren Kühlsystems ausgebildet zur Anordnung unterhalb der Werkstückebene von der Werkstückaufnahme;
- Figur 10: eine vergrößerte isometrische Frontansicht von zwei schubladenartig ausgebildeten Werkstückaufnahmen in ausgezogener Stellung;
- Figur 11: eine isometrische Draufsicht einer Werkstückaufnahme mit mehreren in der Werkstückebene parallel nebeneinander erstreckend angeordneten Parallel-Splice;
- Figur 12: eine isometrische Draufsicht der schubladenartig ausgebildeten Werkstückaufnahmen mit mehreren in der Werkzeugebene erstreckenden, nebeneinander angeordneten End-Splice;
- Figur 13:: eine isometrische Draufsicht von zwei kombinierten, schubladenartig ausgebildeten Werkstückaufnahmen und darauf angeordneten Sonderkabeln; und

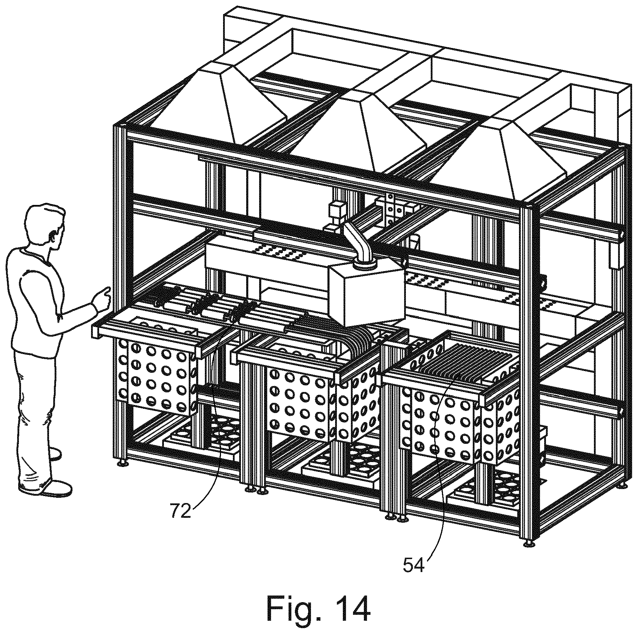

- Figur 14: eine isometrische Frontansicht der Schrumpfeinheit gemäß Figur 1 im bestückten Zustand.

Demnach umfasst die Schrumpfeinheit drei nebeneinander angeordnete und identisch aufgebaute Schrumpfzellen 6, 8, 10, die jeweils aus Verbundrahmen mit mehreren Vertikalstreben 2 und zwischen diesen angeordneten Horizontalstreben 4 aufgebaut sind zur Bildung eines kastenartigen Bearbeitungsraum, der von den Vertikalstreben 2 und Horizontalstreben 4 an den Kanten bzw. Längsseiten umschlossen wird und den jeweils einen Heizraum umfasst.

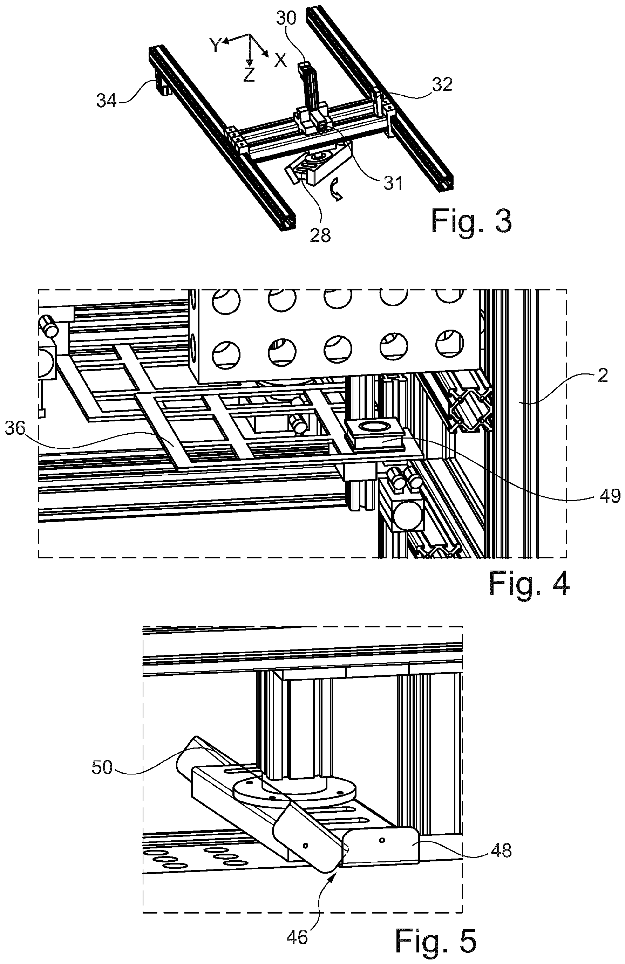

An der Rückseite ist kombiniert für die drei Schrumpfzellen 6, 8, 10 ein Schaltschrank 26 zur Aufnahme der Komponenten für die Steuerung der drei Schrumpfzellen angeordnet, also für die Programmierung und Koordination der Bewegung der Heizungen gemäß Figur 3, der Kühlsysteme, der Luftabsaugung und der weiteren Systemkomponenten.

Jede Schrumpfzelle 6, 8, 10 umfasst am oberen Ende umschlossen von Horizontalstreben 4 jeweils eine Abzugshaube 12, 14, 16, die über ein Kanalsystem 18 an ein Gebläse angeschlossen ist und Bestandteil des Abzugssystems ist. Diese Abzugshauben 12, 14, 16 bilden mit dem Kanalsystem somit den Hauptabzug des Abzugssystems.

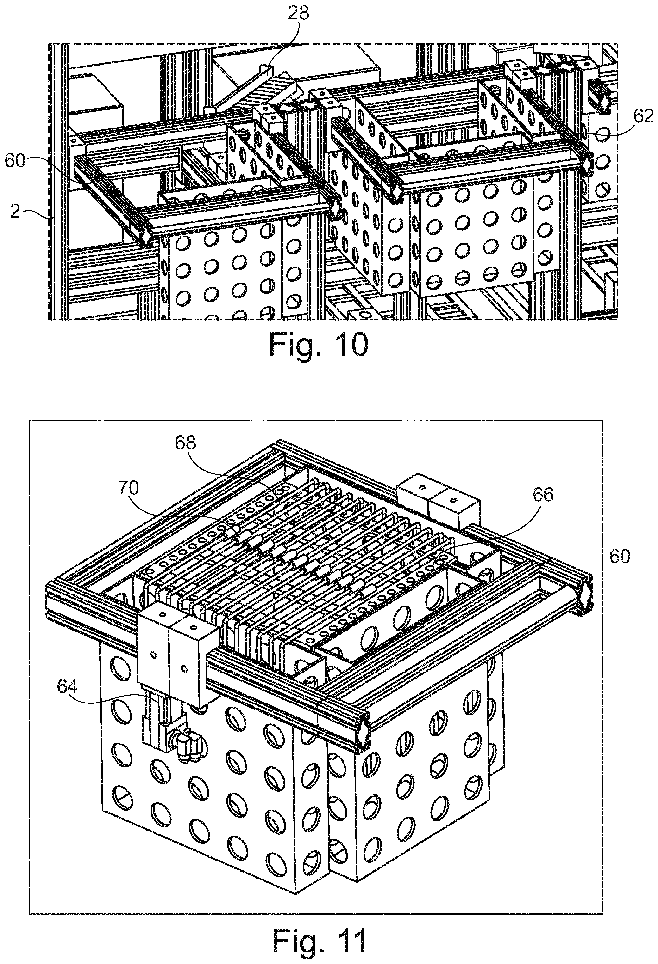

Etwa in der Mitte der Höhe jeder Schrumpfzelle 6, 8, 10 ist eine schubladenartig ausziehbare Werkzeugaufnahme 20, 22, 24 angeordnet und mit der Werkzeugebene zur Aufnahme der Werkstücke parallel erstreckend zur Horizontalen angeordnet. Wiederum ist die sich in der Horizontalen erstreckende Werkzeugebene in einen Verbundrahmen der schubladenartigen Werkzeugaufnahme eingesetzt, wie dieses näher in der Figur 11 dargestellt ist.

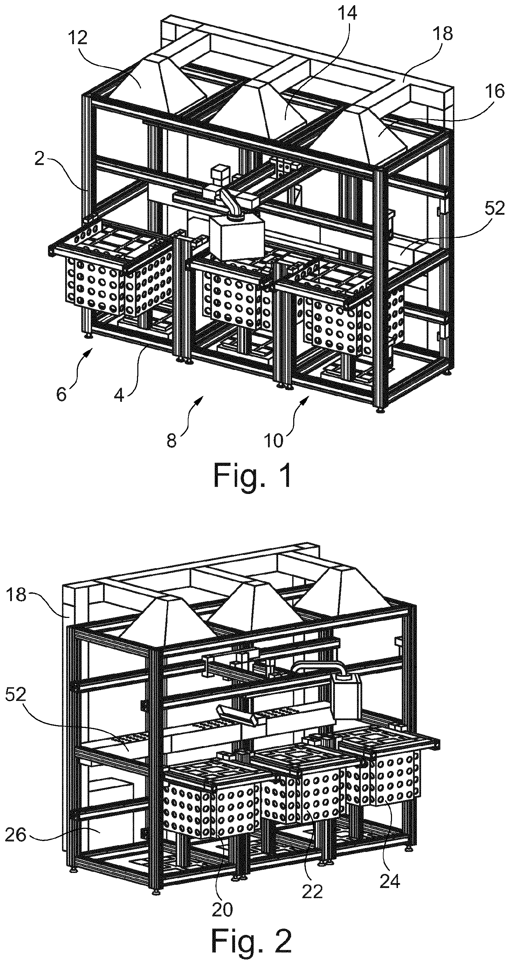

Daneben umfasst das Abzugssystem für Thermomanagement ein Parkabsaugsystem, welches besonders gut in der Figur 2 erkennbar ist. Dieses Parkabsaugsystem umfasst einen sich am hinteren Ende, in der Höhe etwa in der Mitte jeder Schrumpfzelle 6, 8, 10 sich quer über die Schrumpfzellen 6, 8, 10 erstreckenden Absaugbalken 52, der an das Abzugssystem 18 angeschlossen ist und somit die Wärme der Heizelementträger 28 absaugt, wenn diese sich in der in Längsrichtung gesehenen hinteren Parkposition befinden, also unterhalb der Unterseite dieses Absaugbalkens 52.

Die Figur 3 zeigt eine vergrößerte isometrische Draufsicht eines oberen Teil-Heizsystems, welches oberhalb von der sich horizontal erstreckenden Werkstückebene jeder Werkstückaufnahme angeordnet ist. In der Figur 3 sind die Längsachse X, die sich quer zur Längsachse X erstreckende Querachse Y sowie die Höhenachse Z eingetragen. Das Teil-Heizsystem umfasst einen Heizelementträger 28, der am unteren eines sich entlang der Höhenachse Z erstreckenden Betätigungsstabes angeordnet ist und welcher entlang der Z-Richtung auf und ab verstellbar ist durch einen Linearmotor 30 und drehbar ist um die Z-Achse durch einen Rotationsmotor 31. Weitere Linearmotoren 32, 34 ermöglichen zum einen das Verstellen des Heizelementträgers 28 entlang der Längsachse X und entlang der Querachse Y. Somit kann der jeweilige Heizelementträger 28 auftragsspezifisch jede Stelle im Verhältnis zur Werkstückebene anfahren, und zwar der obere Heizelementträger jede Stelle oberhalb von der Werkstückebene und der untere Heizelementträger jede Stelle unterhalb von der Werkstückebene.

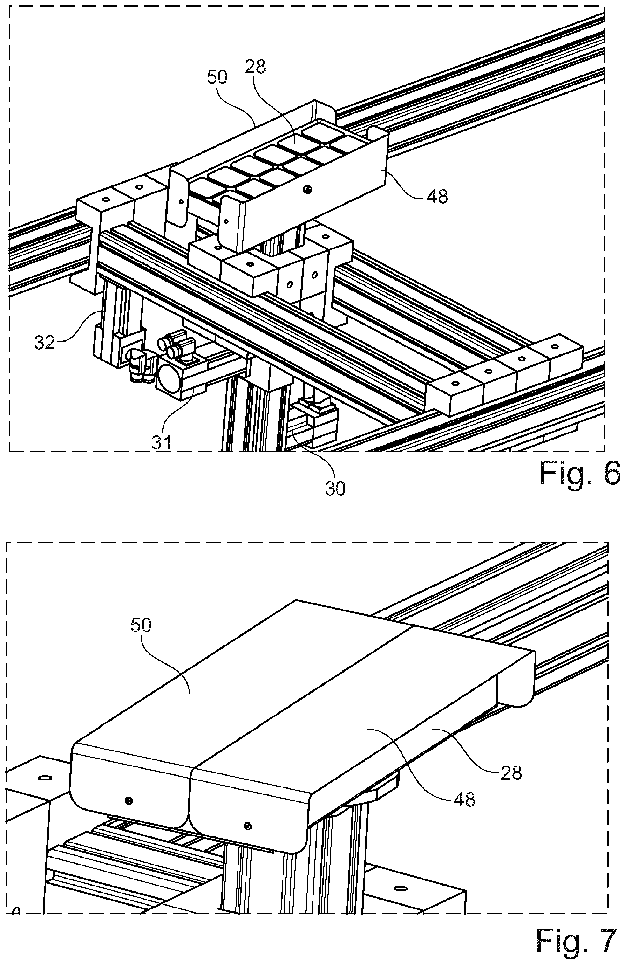

Figur 5 zeigt eine vergrößerte perspektivische Frontansicht des an jedem Heizelementträger, vorliegend eines oberen Heizelementträgers 28 angeordneten Hitzeschotts 46. Das Hitzeschott 46 umfasst zwei schwenkbar um sich entlang der Längsachse des Heizelementträgers 28 erstreckende Winkelprofile 48, 50 mit einem Längsschenkel und sich quer an den Enden zu diesem Längsschenkeln erstreckenden kürzeren Querschenkeln, die drehbar an den Stirnseiten jedes Heizelementträgers 28 angelenkt sind und je gegen eine Feder wirkend offengehalten werden, wie dieses in der Figur 6 dargestellt ist.

Aus der Figur 6 ist ersichtlich, dass jeder Heizelementträger 28 ein Matrix-Heizsystem mit vorliegend 12 einzeln bestrombaren Heizelementen umfasst.

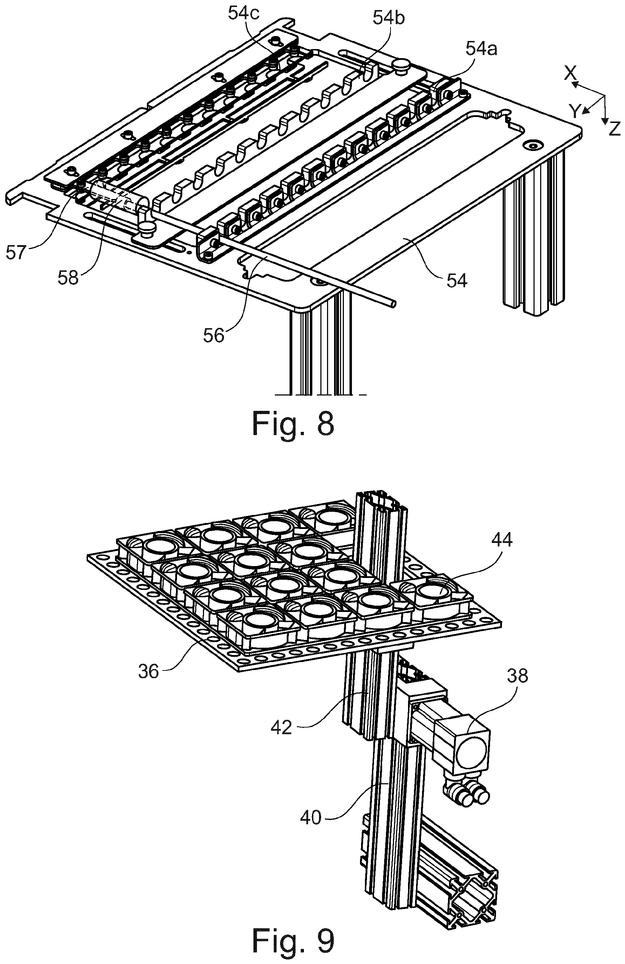

Figur 8 zeigt eine vergrößerte isometrische Frontansicht einer Werkstückaufnahme 54, welche einen plattenartigen Träger mit Öffnungen umfasst und die Werkstückebene definiert. Die Werkstückaufnahme 54 ist zur Aufnahme von Endverbindern ausgebildet und weist dazu drei in Längsrichtung voneinander beabstandete Kabelhalter 54a, 54b, 54c auf, in welche Kabel 56 beabstandet zueinander in Querrichtung in entsprechende Ausnehmungen einlegbar sind. Am hinteren Stirnende ist ein Halter 54c für Terminals angeordnet, auf den die Terminals 57 aufsteckbar sind. Der Verbindungsbereich zwischen den Kabeln 56 und den Terminals 57 ist mit einem Schrumpfschlauch 58 versehen, die durch Erhitzung mittels der Schrumpfzellen 6, 8, 10 erwärmt werden, um die Verbindungsstelle zwischen dem Kabel 56 und dem Terminal 57 dichtend und mediendicht zu verschließen.

Von diesen Kabeln 56 können vorliegend 11 Stück in Querrichtung nebeneinanderliegend in der Werkstückaufnahme zur Verbindung mit entsprechendem Terminal 57 eingelegt werden. Die Heizung mit dem oberen und unteren Heizelementträger 28 fährt den Bereich der Verbindungsstelle zwischen den Kabeln 56 und den Terminals 57 mit dem aufgesetzten Schrumpfschlauch 58 ab, um die Schrumpfschläuche 58 entsprechend den Prozessparametern zu erwärmen und mediendicht mit den Kabeln 56 und den Terminals 57 zu verbinden.

Unterhalb des unteren Teil-Heizsystems jedes Heizelementträgers 28 kann in jeder Schrumpfzelle 6, 8, 10 ein in Figur 9 dargestelltes Kühlsystem vorgesehen sein, welches eine Kühlplatte 36 umfasst, die entlang der Z-Achse höhenverstellbar ist. Zur Verstellung der Kühlplatte 36 in Z-Richtung dient wiederum ein Linearmotor 38, welcher zwei sich versetzt entlang der Z-Achse in der Höhe erstreckende Konstruktionsprofile 40, 42 im Verhältnis zueinander verstellt, wobei an dem oberen Konstruktionsprofil 42 quer erstreckend zu dessen Längsachse die Kühlplatte 36 befestigt ist. Auf der Oberseite der Kühlplatte 36 sind mehrere Ventilatoren 44 angeordnet, die in Betriebsposition unterhalb von der Werkstückebene der Werkstückaufnahme 54 angeordnet sind.

Figuren 10 bis 13 zeigen verschiedene isometrische Frontansichten und Ausführungsformen der in Werkstückschubladen 60, 62 angeordneten Werkstückträger 66. Die Werkstückschubladen werden jeweils gebildet durch einen viereckigen Profilrahmen aufgebaut aus Konstruktionsprofilen. Zusätzlich umfassen die Werkstückschubladen 60, 62 frontseitig und seitlich kastenartige Lochbleche, welche als Kabelwicklungsaufnahmen fungieren. Die Rahmen der Werkstückschubladen 60, 62 sind in Längsrichtung programmgesteuert durch Linearmotoren 64 aus dem jeweiligen Heizraum der jeweiligen Schrumpfzelle 6, 8, 10 ein- und ausfahrbar. Auf die Werkstückschubladen 60, 62 aufsetzbar sind die vorzugsweise plattenförmigen Werkstückträger, von denen in der Figur 11 ein Werkstückträger 66 dargestellt ist, der zur Herstellung von Parallel-Splice Verbindung zwischen zwei stirnseitig in der Mitte aneinander angrenzenden Kabeln 68 ausgebildet ist, die mittels Schrumpfschläuchen 70 an der zu verbindenden Stoßstelle miteinander mediendicht verbunden werden. Die freien Enden der Kabel 68 erstrecken sich nach unten in die Kabelwicklungsaufnahmen.

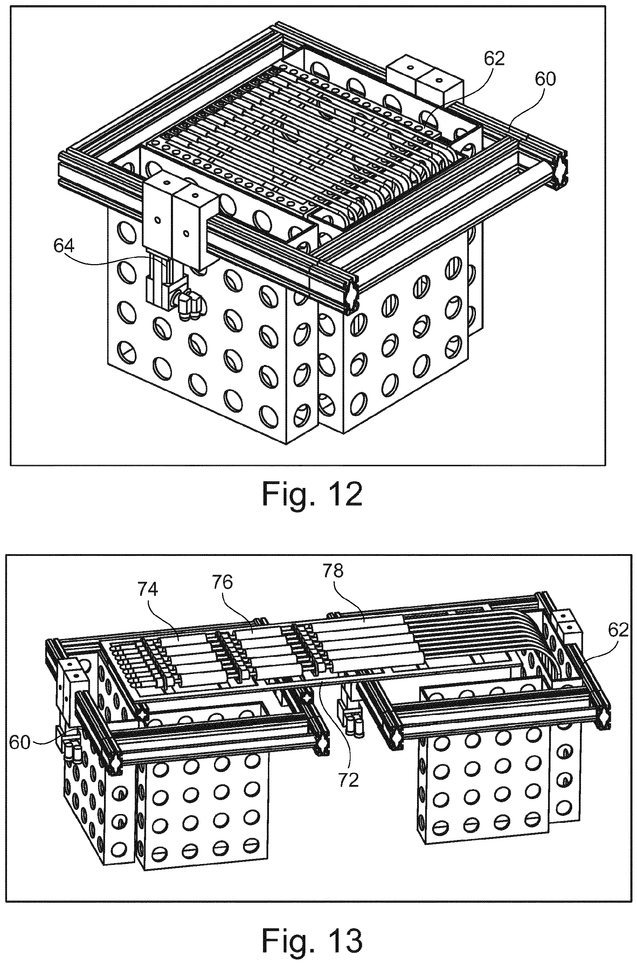

Figur 12 zeigt nochmals eine isometrische Frontansicht des in Figur 8 dargestellten Werkstückträgers 54 zur Fertigung von End-Splicen, und vollständig bestückt.

Bei dieser Ausführungsform wird die kastenartige Kabelwicklungsaufnahme am vorderen Ende der Werkstückschublade 60 verwendet.

Figur 13 zeigt einen größeren Werkstückträger 72, der sich über zwei nebeneinanderliegende Werkstückschubladen 60, 62 erstreckt und somit zwei Schrumpfzellen nebeneinander zur Fertigung einer Sonderserie einsetzt. Der länglich, rechteckige Werkzeugstückträger 72 erstreckt sich über die Heizräume von zwei nebeneinanderliegenden Schrumpfzellen 6, 8 und ist auf zwei Werkstückschubladen 60, 62 aufgesetzt, die also zusammen betrieben werden zur Fertigung einer Sonderserie von Parallel-Splicen mit drei Schrumpfschläuchen 74, 76 78 nebeneinander zur Abdichtung der nebeneinanderliegenden in Längsrichtung erstreckenden Splice-Bereiche.

Erfindungsgemäß ist es also möglich, eine Schrumpfzelle vollständig selbständig zu betreiben oder diese bedingt durch den modularen Aufbau der Schrumpfzelle, beliebig miteinander zu kombinieren, um entweder größere Einheiten zu fertigen, aber auch einen Parallelbetrieb von verschiedenen Produktionsschritten (Bestücken, Erhitzen, Abkühlen) gleichzeitig zu ermöglichen, um somit insgesamt die Durchlaufzeiten bei der Produktion zu reduzieren.

### Bezugszeichenliste

- 2: Vertikalstrebe
- 4: Horizontalstrebe
- 6, 8, 10: Schrumpfzelle
- 12, 14, 16: Abzugshaube
- 18: Kanalsystem
- 20, 22, 24: Werkstückaufnahme
- 26: Schaltschrank
- 28: Heizelementträger
- 30, 32, 34: Linearmotor
- 31: Drehmotor
- 36: Kühlplatte
- 38: Linearmotor
- 40,42: Konstruktionsprofil
- 44: Ventilator
- 46: Hitzeschott
- 48, 50: Winkelprofil
- 52: Absaugbalken
- 54: Werkstückträger
- 54a, b, c: Kabelhalter
- 56: Kabel
- 57: Terminal
- 58: Schrumpfschlauch
- 60,62: Werkstückschubladen
- 64: Linearmotor
- 66: Werkstückträger
- 68: Kabel
- 70: Schrumpfschlauch
- 72: Werkstückträger
- 74, 76, 78: Schrumpfschlauch

## Patentansprüche

1. Schrumpfgerät zur Durchführung eines Schrumpfprozesses an einem auf mindestens ein Kabel aufgezogenen Schrumpfschlauch (58, 74, 76, 78) mit einem von diesem gebildeten und umschlossenen Heizraum, einer in den Heizraum einbringbaren Werkstückaufnahme (20, 22, 24), welche eine Werkstückebene definiert, in welcher mindestens ein mit einem Schrumpfschlauch (58, 74, 76, 78) versehenes Kabel (56, 68) angeordnet ist, einem Heizsystem, einem Kühlsystem zur Kühlung des mindestens einen in der Werkstückaufnahme (20, 22, 24) angeordneten Werkstücks, sowie einer Steuerung (26), **DADURCH GEKENNZEICHNET, DASS** das Heizsystem ein oberes Teil-Heizsystem mit einem oberen Heizelementträger (28) umfasst, der über die Steuerung oberhalb der Werkstückebene entlang einer Längsrichtung (X), entlang einer sich quer zur Längsrichtung erstreckenden Querrichtung (Y), entlang einer sich quer zur Längs- (X) und zur Querrichtung (Y) erstreckenden oberen Höhenrichtung (Z) im Verhältnis zu dem Werkstück bewegbar ist und um die obere Höhenrichtung (Z) im Verhältnis zum Werkstück drehbar ist, dass das Heizsystem ein unteres Teil-Heizsystem mit einem unteren Heizelementträger (28) umfasst, der über die Steuerung unterhalb der Werkstückebene entlang der Längsrichtung (X), entlang der Querrichtung (Y), entlang einer sich quer zur Längsrichtung (X) und zur Querrichtung (Y) erstreckenden unteren Höhenrichtung (Z) im Verhältnis zu dem Werkstück bewegbar ist und um die untere Höhenrichtung (Z) im Verhältnis zum Werkstück drehbar ist, so dass das obere Teil-Heizsystem und das untere Teil-Heizsystem jeweils entlang mindestens 4 Achsen im Verhältnis zu dem mindestens einen Werkstück verstellbar bzw. drehbar sind.

2. Schrumpfgerät nach Anspruch 1, **DADURCH GEKENNZEICHNET, DASS** das obere Teil-Heizsystem und das untere Teil-Heizsystem jeweils entlang 6 Achsen im Verhältnis zu den Werkstücken verstellbar Sind.

3. Schrumpfgerät nach Anspruch 1 oder 2, **DADURCH GEKENNZEICHNET, DASS** der obere Heizelementträger (28) über mindestens einen Antrieb automatisch über die Steuerung (26) programmgesteuert beweglich ist, und dass der untere Heizelementträger (28) über mindestens einen Antrieb automatisch über die Steuerung (26) programmgesteuert beweglich ist.

4. Schrumpfgerät nach einem der vorhergehenden Ansprüche, **DADURCH GEKENNZEICHNET, DASS** dieses ein Abzugssystem für das Heizsystem in Parkposition umfasst.

5. Schrumpfgerät nach einem der vorhergehenden Ansprüche, **DADURCH GEKENNZEICHNET, DASS** das Heizsystem ein Hitzeschott (46) umfasst.

6. Schrumpfgerät nach Anspruch 5, **DADURCH GEKENNZEICHNET, DASS** das Hitzeschott (46) an einem der Heizelementträger (28) angeordnet ist.

7. Schrumpfgerät nach einem der vorhergehenden Ansprüche, **DADURCH GEKENNZEICHNET, DASS** die Heizelementträger (28) ein Matrix Heizsystem mit mehreren Heizflächen umfassen.

8. Schrumpfgerät nach einem der vorhergehenden Ansprüche, **DADURCH GEKENNZEICHNET, DASS** dieses aufgebaut ist aus Konstruktionsprofilen (40, 42), die ein Verbundrahmensystem bilden.

9. Schrumpfgerät nach Anspruch 8, **DADURCH GEKENNZEICHNET, DASS** das Schrumpfgerät durch Platten, insbesondere durchsichtige Plexiglasplatten verschlossen ist.

10. Schrumpfgerät nach einem der vorhergehenden Ansprüche, **DADURCH GEKENNZEICHNET, DASS** dieses insbesondere seitlich an der Werkstückaufnahme (20, 22, 24) angeordnete Kabelwicklungsaufnahmen umfasst.

11. Schrumpfgerät nach Anspruch 10, **DADURCH GEKENNZEICHNET, DASS** die Kabelwicklungsaufnahmen aus kastenartig zusammengesetzten Lochplatten aufgebaut sind.

12. Schrumpfgerät nach einem der vorhergehenden Ansprüche, **DADURCH GEKENNZEICHNET, DASS** die Werkstückaufnahme (20, 22, 24) in den Heizraum einschiebbar und aus diesem ausschiebbar ausgebildet ist.

13. Schrumpfgerät nach Anspruch 12, **DADURCH GEKENNZEICHNET, DASS** die Werkstückaufnahme (20, 22, 24) schubladenartig ausgebildet ist.

14. Schrumpfgerät nach einem der vorhergehenden Ansprüche, **DADURCH GEKENNZEICHNET, DASS** die Werkstückstückaufnahme (20, 22, 24) zur Aufnahme eines plattenartigen Werkstückträgers (54, 66) ausgebildet ist.

15. Schrumpfgerät nach Anspruch 12 bis 14, **DADURCH GEKENNZEICHNET, DASS** die Werkstückaufnahme (20, 22, 24) motorisch betätigt ist.

16. Schrumpfgerät nach Anspruch 12 bis 14, **DADURCH GEKENNZEICHNET, DASS** die Werkstückaufnahme auf einem Wagen angeordnet ist.

17. Schrumpfgerät nach einem der vorhergehenden Ansprüche, **DADURCH GEKENNZEICHNET, DASS** das Kühlsystem eine Kühlfläche umfasst, die im Verhältnis zu der Werkstückaufnahme verstellbar ist.

18. Schrumpfgerät nach einem der vorhergehenden Ansprüche, **DADURCH GEKENNZEICHNET, DASS** dieses ein visuelles Inspektionssystem zur Qualitätsprüfung umfasst, insbesondere ein automatisches Kamerasystem zur Prüfung der Schweißstelle an einer Verbindungsstelle des Kabels nach dem Erhitzen,

## Claims

1. Shrinking device for carrying out a shrinking method on a shrinking tube (58, 74, 76, 78) mounted on at least one cable, forming and enclosing a heating chamber, a workpiece receptacle (20, 22, 24) which can be introduced into the heating chamber and which defines a workpiece plane in which at least one cable (56, 68) provided with a shrinking tube (58, 74, 76, 78) is arranged s, a heating system, a cooling system for cooling the at least one workpiece arranged in the workpiece receptacle (20, 22, 24), and a control system, **CHARACTERIZED IN THAT** the heating system comprises an upper partial heating system with an upper heating element carrier with an upper heating element carrier (28) which is movable via the control system above the workpiece plane along a longitudinal direction (X), along a transverse direction (Y) extending transversely to the longitudinal direction, along an upper height direction (Z) extending transversely to the longitudinal direction (X) and to the transverse direction (Y) in relation to the workpiece, and is rotatable about the upper height direction (Z) in relation to the workpiece, that the heating system comprises a lower partial heating system with a lower heating element carrier (28) which is movable via the control below the workpiece plane along the longitudinal direction (X), along the transverse direction (Y), along a lower height direction ( Z) extending transversely to the longitudinal direction (X) and to the transverse direction (Y) in relation to the workpiece, and is rotatable about the lower height direction (Z) in relation to the workpiece, so that the upper partial heating system and the lower partial - heating system are movable and rotatable, respectively, along at least 4 axes in relation to the at least one workpiece.

2. Shrinking device according to claim 1, **CHARACTERIZED IN THAT** the upper partial heating system and the lower partial heating system are each adjustable along 6 axes relative to the workpieces.

3. Shrinking device according to claim 1 or 2, **CHARACTERIZED IN THAT** the upper heating element carrier (28) is automatically movable under program control via at least one drive via the controller (26), and that the lower heating element support (28) is automatically movable under program control via at least one drive via the controller (26).

4. Shrinking device according to any one of the preceding claims, **CHARACTERIZED IN THAT** it comprises an extraction system for the heating system in parking position.

5. Shrinking device according to any one of the preceding claims, **CHARACTERIZED IN THAT** the heating system comprises a heat shield (46).

6. Shrinking device according to claim 5, **CHARACTERIZED IN THAT** the heat shield (46) is arranged on one of the heating element carriers (28).

7. Shrinking device according to any one of the preceding claims, **CHARACTERIZED IN THAT** the heating element carriers (28) comprise a matrix heating system having a plurality of heating surfaces.

8. Shrinking device according to any one of the preceding claims, **CHARACTERIZED IN THAT** it is constructed of structural profiles (40, 42) forming a composite frame system.

9. Shrinking device according to claim 8, **CHARACTERIZED IN THAT** the shrinking apparatus is closed by plates, in particular transparent plexiglas plates.

10. Shrinking device according one of the preceding claims, **CHARACTERIZED IN THAT** it comprises cable winding receptacles arranged, in particular, laterally on the workpiece receptacle (20, 22, 24).

11. Shrinking device apparatus according to claim 10, **CHARACTERIZED IN THAT** said cable winding receptacles are constructed of perforated plates assembled in a box-like manner.

12. Shrinking device according to one of the preceding claims, **CHARACTERIZED IN THAT** the workpiece receptacle (20, 22, 24) is designed to slide into and out of the heating chamber.

13. Shrinking device according to claim 12, **CHARACTERIZED IN THAT** the workpiece receptacle (20, 22, 24) is designed drawer-like.

14. Shrinking device according to one of the preceding claims, **CHARACTERIZED IN THAT** the workpiece receptacle (20, 22, 24) is configured to receive a plate-like workpiece carrier (54, 66).

15. Shrinking device according to claim 12 to 14, **CHARACTERIZED IN THAT** the workpiece receptacle (20, 22, 24) is motor operated.

16. Shrinking device according to claim 12 to 14, **CHARACTERIZED IN THAT** the workpiece receptacle is arranged on a carriage.

17. Shrinking device according to one of the preceding claims, **CHARACTERIZED IN THAT** the cooling system comprises a cooling surface that is adjustable relative to the workpiece receptacle.

18. Shrinking device according to one of the preceding claims, **CHARACTERIZED IN THAT** it comprises a visual inspection system for quality control, in particular an automatic camera system to examine the welding point on a connection point of the cable after heating.

## Revendications

1. Appareil de rétraction pour l'exécution d'un processus de rétraction sur une gaine thermorétractable (58, 74, 76, 78) enfilée sur au moins un câble, présentant un espace de chauffage formé et entouré par celle-ci, un logement de pièce à oeuvrer (20, 22, 24) apte à être introduit dans l'espace de chauffage et définissant un plan de pièce à oeuvrer dans lequel est disposé au moins un câble (56, 68) pourvu d'une gaine thermorétractable (58, 74, 76, 78), un système de chauffage, un système de refroidissement pour refroidir ladite au moins une pièce à oeuvrer disposée dans le logement de pièce à oeuvrer (20, 22, 24), ainsi qu'une commande (26),
**caractérisé en ce que**
le système de chauffage comprend un système de chauffage partiel supérieur avec un support d'élément chauffant (28) supérieur, qui, par l'intermédiaire de la commande, peut être déplacé par rapport à la pièce à oeuvrer au-dessus du plan de la pièce à oeuvrer le long d'une direction longitudinale (X), le long d'une direction transversale (Y) s'étendant transversalement à la direction longitudinale, le long d'une direction de hauteur (Z) supérieure s'étendant transversalement à la direction longitudinale (X) et à la direction transversale (Y), et qui peut tourner par rapport à la pièce à oeuvrer autour de la direction de hauteur (Z) supérieure,
**en ce que** le système de chauffage comprend un système de chauffage partiel inférieur avec un support d'élément chauffant (28) inférieur qui, par l'intermédiaire de la commande, peut être déplacé par rapport à la pièce à oeuvrer au-dessous du plan de la pièce à oeuvrer le long de la direction longitudinale (X), le long de la direction transversale (Y), le long d'une direction de hauteur (Z) inférieure s'étendant transversalement à la direction longitudinale (X) et à la direction transversale (Y) et qui peut tourner par rapport à la pièce à oeuvrer autour de la direction de hauteur (Z) inférieure, de sorte que le système de chauffage partiel supérieur et le système de chauffage partiel inférieur peuvent chacun être déplacés ou tournés par rapport à ladite au moins une pièce à oeuvrer le long d'au moins 4 axes.

2. Appareil de rétraction selon la revendication 1,
**caractérisé en ce que**
le système de chauffage partiel supérieur et le système de chauffage partiel inférieur sont chacun déplaçables par rapport aux pièces à oeuvrer le long de 6 axes.

3. Appareil de rétraction selon la revendication 1 ou 2,
**caractérisé en ce que**
le support d'élément chauffant (28) supérieur est mobile automatiquement par au moins un entraînement, en étant commandé de façon programmée par l'intermédiaire de la commande (26), et
**en ce que** le support d'élément chauffant (28) inférieur est mobile automatiquement par au moins un entraînement, en étant commandé de façon programmée par l'intermédiaire de la commande (26).

4. Appareil de rétraction selon l'une des revendications précédentes,
**caractérisé en ce que**
celui-ci comprend un système extracteur pour le système de chauffage vers la position de stationnement.

5. Appareil de rétraction selon l'une des revendications précédentes,
**caractérisé en ce que**
le système de chauffage comprend une cloison thermique (46).

6. Appareil de rétraction selon la revendication 5,
**caractérisé en ce que**
la cloison thermique (46) est disposée sur l'un des supports d'élément chauffant (28).

7. Appareil de rétraction selon l'une des revendications précédentes,
**caractérisé en ce que**
les supports d'élément chauffant (28) comprennent un système de chauffage matriciel ayant plusieurs surfaces chauffantes.

8. Appareil de rétraction selon l'une des revendications précédentes,
**caractérisé en ce que**
celui-ci est constitué de profilés de construction (40, 42) formant un système de cadre interconnecté.

9. Appareil de rétraction selon la revendication 8,
**caractérisé en ce que**
l'appareil de rétraction est fermé par des plaques, en particulier des plaques de plexiglas transparentes.

10. Appareil de rétraction selon l'une des revendications précédentes,
**caractérisé en ce que**
celui-ci comprend des logements d'enroulement de câble disposés en particulier latéralement sur le logement de pièce à oeuvrer (20, 22, 24).

11. Appareil de rétraction selon la revendication 10,
**caractérisé en ce que**
les logements d'enroulement de câble sont constitués de plaques perforées assemblées à la manière d'un caisson.

12. Appareil de rétraction selon l'une des revendications précédentes,
**caractérisé en ce que**
le logement de pièce à oeuvrer (20, 22, 24) est conçu de manière à pouvoir être inséré dans l'espace de chauffage et à pouvoir être retiré de celui-ci.

13. Appareil de rétraction selon la revendication 12,
**caractérisé en ce que**
le logement de pièce à oeuvrer (20, 22, 24) est conçu comme un tiroir.

14. Appareil de rétraction selon l'une des revendications précédentes,
**caractérisé en ce que**
le logement de pièce à oeuvrer (20, 22, 24) est conçu pour recevoir un porte-pièce (54, 66) en forme de plaque.

15. Appareil de rétraction selon les revendications 12 à 14,
**caractérisé en ce que**
le logement de pièce à oeuvrer (20, 22, 24) est actionné par voie motrice.

16. Appareil de rétraction selon les revendications 12 à 14,
**caractérisé en ce que**
le logement de pièce à oeuvrer est disposé sur un chariot.

17. Appareil de rétraction selon l'une des revendications précédentes,
**caractérisé en ce que**
le système de refroidissement présente une surface de refroidissement qui est déplaçable par rapport au logement de pièce à oeuvrer.

18. Appareil de rétraction selon l'une des revendications précédentes,
**caractérisé en ce que**
celui-ci comprend un système d'inspection visuelle pour le contrôle de la qualité, en particulier un système de caméra automatique pour le contrôle de la soudure au niveau d'une jonction du câble, après le chauffage.
